# EUROPÄISCHE PATENTANMELDUNG

(11) **EP 4 434 900 A1**
(43) Veröffentlichungstag der Anmeldung: **25.09.2024**
(21) Anmeldenummer: 24163095.3
(22) Anmeldetag: 13.03.2024
(51) Int. Cl.: B65B 19/02, B29C 65/00, B65B 19/22, B65B 49/08, B65B 49/14, B65B 51/10

(54) **VERFAHREN ZUM VERBINDEN VON FALTLAPPEN EINES ZUSCHNITTS**

(30) Priorität: 20.03.2023 DE 102023106885
(71) Anmelder: Focke & Co. (GmbH & Co. KG), 27283 Verden (DE)
(72) Erfinder: Walter, Jan-Christian, 21357 Bardowick (DE); Riegler, Stefan, 21073 Hamburg (DE)
(74) Vertreter: Aulich, Martin

(57) **Zusammenfassung**

Die Erfindung betrifft ein Verfahren und eine Vorrichtung zum Verbinden eines ersten Faltlappens (16 a-b, 18 a-d, 19 a-b) eines Zuschnitts (13) im Rahmen der Fertigung von Packungen (10), insbesondere für Tabakprodukte, mit einem oder mehreren weiteren Faltlappen (16 a-b, 18 a-d, 19a-b) desselben Zuschnitts (13) oder mit einem anderen Zuschnitt unter Einbringen von Verbindungswärme während des Verbindungsvorgangs. Die Erfindung ist dadurch gekennzeichnet, dass der erste Faltlappen (16 a-b, 18 a-d, 19 a-b) und/oder der andere Zuschnitt vorgewärmt wird, bevor der erste Faltlappen (16 a-b, 18 a-d, 19 a-b) und ein zweiter Faltlappen (16 a-b, 18 a-d, 19 a-b) bzw. der erste Faltlappen (16 a-b, 18 a-d, 19 a-b) und der andere Zuschnitt während des Verbindungsvorgangs unter Einbringen der Verbindungswärme miteinander verbunden werden, und/oder dass der erste Faltlappen (16 a-b, 18 a-d, 19 a-b), bevor er mit einem oder dem zweiten Faltlappen (16 a-b, 18 a-d, 19 a-b) oder mit dem anderen Zuschnitt während des Verbindungsvorgangs unter Einbringen der Verbindungswärme verbunden wird, mit einem dritten Faltlappen (16 a-b, 18 a-d, 19 a-b) verbunden wird, insbesondere ebenfalls unter Einbringen von Verbindungswärme während des Verbindungsvorgangs.

## Beschreibung

Die vorliegende Erfindung betrifft ein Verfahren zum Verbinden eines ersten Faltlappens eines vorzugsweise aus insbesondere siegelbarer Folie oder insbesondere siegelbarem Papier bestehenden Zuschnitts im Rahmen der Fertigung von Packungen, insbesondere für Tabakprodukte, mit einem oder mehreren weiteren Faltlappen desselben Zuschnitts oder mit einem anderen Zuschnitt unter Einbringen von Verbindungswärme während des Verbindungsvorgangs. Die Erfindung betrifft des Weiteren eine entsprechende Vorrichtung.

Bei der Herstellung einer Packung für Tabakprodukte mit einer aromadichten Außenumhüllung, einem sogenannten Dichtblock, die über sogenannte Kuvertfaltungen mit mehreren Lagen übereinander angeordneter Faltlappen verfügen, werden üblicherweise zuerst alle Faltungen der Faltlappen-Kuvertfaltung vollendet, bevor im Anschluss der Verbindungsprozess zur Verbindung der Faltlappen beginnt. Im Rahmen dieses Verbindungsprozesses werden die Faltlappen in der Regel gesiegelt.

Dabei werden die einzelnen, aus siegelbarer Folie oder siegelbarem Papier bestehenden Faltlappen miteinander verbunden, indem in der Regel durch Anlage eines Siegelorgans über die äußerste Lage durch sämtliche Faltlappen hindurch Wärme in die bereits übereinander liegenden Faltlappen eingebracht wird, mit der diese miteinander verbunden werden können. Wärme, die insbesondere in Menge und/oder Dauer der Einwirkung hierzu geeignet ist, wird im Rahmen dieser Anmeldung als Verbindungswärme bezeichnet. Dieser Wärmeeintrag kann bei einer getakteten Maschine nur in der Stillstandsphase erfolgen. Bei einer kontinuierlichen Maschine geschieht dieses üblicherweise mit mitlaufenden Siegelelementen. Bei den einzelnen Siegelprozessen dauert es jeweils geraume Zeit, um die Verbindungswärme mit dem Siegelorgan bis zu der untersten Lage der Faltlappen zu bringen, was entweder die Maschinengeschwindigkeit begrenzt oder lange Siegelstrecken erforderlich macht.

Ausgehend hiervon ist es Aufgabe der vorliegenden Erfindung, das eingangs genannte Verfahren und die eingangs genannte Vorrichtung weiterzuentwickeln.

Diese Aufgabe wird gelöst durch ein Verfahren mit den Merkmalen des Anspruchs 1 und eine Vorrichtung mit den Merkmalen des Anspruchs 11.

Danach ist das erfindungsgemäße Verbindungsverfahren gemäß einer ersten Variante dadurch gekennzeichnet, dass der erste Faltlappen und/oder der andere Zuschnitt (gezielt) vorgewärmt wird, bevor der erste Faltlappen und ein zweiter, insbesondere in einer Verbindungsstellung an ihm anliegende Faltlappen, mit dem er verbunden werden soll, bzw. der erste Faltlappen und der andere Zuschnitt, an dem der erste Faltlappen bevorzugt in einer Verbindungsstellung zur Verbindung mit diesem anliegt, während des Verbindungsvorgangs unter Einbringen der Verbindungswärme miteinander verbunden werden.

Das (gezielte) Vorwärmen des ersten Faltlappens bzw. des anderen Zuschnitts mit entsprechender Vorwärme hat unter anderem den vorteilhaften Effekt, dass die Einwirkzeit, in der Verbindungswärme für eine gute Verbindung aufgebracht werden muss, insgesamt verringert werden kann im Vergleich zu dem üblichen Verfahren im Stand der Technik, in dem nicht vorgewärmt wird.

Denn gerade, wenn eine Vielzahl von übereinander angeordneter Faltlappen erwärmt werden muss, dauert es ansonsten, wie eingangs bereits ausgeführt, geraume Zeit, bis die Verbindungswärme - wenn die Faltlappen nicht vorgewärmt sind - bis zu dem untersten Faltlappen durchgedrungen ist. Es versteht sich dabei, dass nicht nur der erste Faltlappen oder der andere Zuschnitt vorgewärmt werden können, sondern natürlich auch der zweite Faltlappen oder auch weitere Faltlappen, die miteinander verbunden werden sollen bzw. ggf. jeder zu verbindende Faltlappen.

Zusätzlich oder alternativ kann gemäß einer zweiten Variante der Erfindung auch vorgesehen sein, dass der erste Faltlappen, bevor er mit einem oder dem zweiten Faltlappen oder mit dem anderen Zuschnitt während des Verbindungsvorgangs unter Einbringen der Verbindungswärme verbunden wird, mit einem dritten der miteinander zu verbindenden Faltlappen verbunden wird, insbesondere ebenfalls unter Einbringen von Verbindungswärme während des Verbindungsvorgangs. Mit anderen Worten können beispielsweise die drei miteinander zu verbindenden Faltlappen auch sequentiell verbunden werden. Auch auf diese Weise kann die Zeit verringert werden, in der die Verbindungswärme in sämtliche Verbindungspartner eindringt. Dies auch deshalb, da sich ohne eine vorherige Verbindung von zwei der Verbindungspartner, hier also des ersten und des dritten Faltlappens, eine isolierende Luftschicht zwischen diesen befindet, die die Verbindungswärme ansonsten erst durchdringen müsste. Im Rahmen der vorherigen Verbindung des ersten und des dritten Faltlappens entfällt diese Luftschicht bzw. wird verdrängt, sodass sie für eine abschließende Verbindung der genannten drei Faltlappen keine Rolle mehr spielt.

Gemäß einer weiteren Ausführungsform der Erfindung kann vorgesehen sein, den ersten Faltlappen und/oder den anderen Zuschnitt vorzuwärmen, bevor der erste Faltlappen und/oder der zweite Faltlappen in eine Endstellung gefaltet wird, insbesondere in eine Endstellung, in der der erste Faltlappen und der zweite Faltlappen bzw. der erste Faltlappen und der andere Zuschnitt durch das Einbringen der Verbindungswärme miteinander verbunden werden.

Gemäß einer weiteren Ausführungsform der Erfindung kann vorgesehen sein, dass der erste Faltlappen und/oder der andere Zuschnitt vorgewärmt wird, bevor der erste Faltlappen und/oder der zweite Faltlappen in eine bzw. die Verbindungsstellung gefaltet wird, in der der erste Faltlappen und der zweite Faltlappen bzw. der erste Faltlappen und der andere Zuschnitt durch das Einbringen der Verbindungswärme miteinander verbunden werden.

Gemäß einer weiteren Ausführungsform der Erfindung kann vorgesehen sein, dass der erste Faltlappen durch ein insbesondere Vorwärme abgebendes und/oder ein Vorwärme erzeugendes Heizorgan vorgewärmt wird, insbesondere ein Heizorgan, an das der erste Faltlappen durch Relativbewegung angelegt wird, vorzugweise ein bewegbares Heizorgan, das zu diesem Zweck an den in Position gehaltenen ersten Faltlappen heranbewegt wird.

Gemäß einer weiteren Ausführungsform der Erfindung kann vorgesehen sein, dass der erste Faltlappen in einer von seiner Endstellung abweichenden Vorwärmstellung vorgewärmt wird und danach durch Faltung aus der Vorwärmstellung in die insbesondere mit seiner Endstellung übereinstimmenden Verbindungsstellung überführt wird.

Gemäß einer weiteren Ausführungsform der Erfindung kann vorgesehen sein, dass der erste Faltlappen gemeinsam mit einem oder dem an ihn angelegten dritten Faltlappen vorgewärmt wird, vorzugsweise dabei mit dem dritten Faltlappen durch Siegelung verbunden wird, und dass der erste Faltlappen danach gemeinsam mit dem an ihm anliegenden, bevorzugt mit ihm verbundenen dritten Faltlappen in eine oder die Verbindungsstellung überführt wird, in der er dann mit dem zweiten Faltlappen oder dem anderen Zuschnitt verbunden wird.

Gemäß einer weiteren Ausführungsform der Erfindung kann vorgesehen sein, dass der erste Faltlappen Teil eines eine Innenpackung oder eine Gruppe von Innenpackungen schlauchförmig umgebenden, für diese eine Außenumhüllung bildenden Zuschnitts ist und im Rahmen der Fertigung dieser Außenumhüllung vorgewärmt und dabei entweder mit dem zweiten Faltlappen und ggf. mit dem dritten Faltlappen verbunden wird, insbesondere im Rahmen der Herstellung einer den ersten Faltlappen umfassenden Kuvertfaltung, oder dabei mit der aus dem anderen Zuschnitt gebildeten Innenpackung verbunden wird.

Gemäß einer weiteren Ausführungsform der Erfindung kann vorgesehen sein, dass der zweite Faltlappen ein Querseitenfaltlappen der Kuvertfaltung ist, insbesondere ein in seiner Endstellung gegen eine Längsseite der Innenpackung gefalteter Seitenfaltlappen, und dass der erste Faltlappen ein an diesen angrenzender, insbesondere dreieckförmiger Faltlappen ist.

Gemäß einer weiteren Ausführungsform der Erfindung kann vorgesehen sein, dass der dritte Faltlappen ein Längsseitenfaltlappen ist, an den, bevor der angrenzende Faltlappen aus seiner Vorwärmstellung in die Verbindungsstellung gefaltet wird, der angrenzende Faltlappen durch Falten des Längsseitenfaltlappens und/oder des angrenzenden Faltlappens angelegt und insbesondere mit diesem vorzugsweise durch Siegeln verbunden wird, wobei danach der angrenzende Faltlappen gemeinsam mit dem Längsseitenfaltlappen zumindest oder nur in einem Bereich, in dem sie überlappen, vorgewärmt wird, wobei der angrenzende Faltlappen und der Längsseitenfaltlappen danach gemeinsam auf den Seitenfaltlappen gefaltet werden.

Gemäß einer weiteren Ausführungsform der Erfindung kann vorgesehen sein, dass, wenn sich sämtliche Faltlappen der Kuvertfaltung in ihrer jeweiligen Endstellung befinden, übereinander liegende Faltlappen der Kuvertfaltung unter Einbringen von Verbindungswärme während des Verbindungsvorgangs, ggf. erneut, miteinander verbunden werden, insbesondere durch thermisches Siegeln oder Schweißen.

Gemäß einer weiteren Ausführungsform der Erfindung kann vorgesehen sein, dass der erste Faltlappen auf der Seite, die mit dem zweiten Faltlappen oder dem anderen Zuschnitt verbunden wird, mit einer Heißklebstoffschicht versehen ist, dass die gegenüberliegende Seite des ersten Faltlappens keine Heißklebstoffschicht aufweist, und dass beim Vorwärmen des ersten Faltlappens diese gegenüberliegende Seite durch Relativbewegung an das Heizorgan angelegt wird.

Zusätzlich oder alternativ kann vorgesehen sein, dass die Haupteinstrahlrichtung der insbesondere von dem Heizorgan stammenden Vorwärme zum Vorwärmen des ersten Faltlappens auf diese gegenüberliegende Seite gerichtet ist.

Gemäß einer weiteren Ausführungsform der Erfindung kann vorgesehen sein, dass der erste Faltlappen auf der Seite, die mit dem zweiten Faltlappen oder mit dem anderen Zuschnitt verbunden wird, mit einer Heißklebstoffschicht versehen ist, und dass die Parameter der Wärmeeintragung während des Vorwärmens des ersten Faltlappens so gewählt sind, dass die Temperatur der Heißklebstoffschicht unterhalb der Schmelztemperatur des Heißklebstoffs bleibt.

Gemäß einer weiteren Ausführungsform der Erfindung kann vorgesehen sein, dass der erste Faltlappen und/oder der andere Zuschnitt vorgewärmt wird mit der Wärmestrahlung eines insbesondere von dem ersten Faltlappen und/oder dem anderen Zuschnitt entfernt angeordneten, als Wärmestrahler ausgebildeten Heizorgans und/oder durch Vorwärme, die von einem an dem ersten Faltlappen und/oder dem anderen Zuschnitt anliegenden Heizorgan stammt und von diesem mittels Kontaktwärmeübertragung an den ersten Faltlappen bzw. den anderen Zuschnitt übertragen wird.

Gemäß einer weiteren Ausführungsform der Erfindung kann vorgesehen sein, dass zunächst der erste und der dritte Faltlappen in einem ersten Faltschritt aneinandergelegt werden und danach unter Einbringen der Verbindungswärme miteinander verbunden werden, und dass danach in einem zweiten Faltschritt der insbesondere in eine Endstellung gefaltete zweite Faltlappen und die beiden bereits miteinander verbundenen Faltlappen aneinandergelegt werden, insbesondere durch Falten der bereits miteinander verbundenen Faltlappen auf den ersten Faltlappen, und danach durch Einbringen von Verbindungswärme miteinander verbunden werden.

Eine erfindungsgemäße Vorrichtung zum Verbinden eines ersten Faltlappens eines vorzugsweise aus insbesondere siegelbarer Folie oder insbesondere siegelbarem Papier bestehenden Zuschnitts im Rahmen der Fertigung von Packungen, insbesondere für Tabakprodukte, mit einem oder mehreren weiteren Faltlappen desselben Zuschnitts oder mit einem anderen Zuschnitt, umfasst zumindest eine Falteinrichtung, mit der der erste Faltlappen und/oder ein oder mehrere der anderen Faltlappen gefaltet werden können, und eine insbesondere ein Siegelorgan umfassende Verbindungseinrichtung, mit der der erste Faltlappen und/oder ein oder mehrere der anderen Faltlappen und/oder der andere Zuschnitt miteinander unter Einbringen von Verbindungswärme miteinander verbunden werden können.

Dabei kann weiter vorgesehen sein, dass die Vorrichtung ein Heizorgan aufweist zum Vorwärmen des ersten Faltlappens und/oder des anderen Zuschnitts vor dem Verbinden derselben.

Weiter kann das Heizorgan über eine Anlagefläche verfügen, an die der erste Faltlappen zur Wärmeübertragung anlegbar ist, wobei die Anlagefläche über eine oder mehrere, mit Unterdruck beaufschlagbare Saugbohrungen verfügt, sodass der erste Faltlappen während der Wärmeübertragung durch Unterdruck an der Anlagefläche gehalten werden kann.

Weiter kann vorgesehen sein, dass das Heizorgan, insbesondere ein Heizkörper oder eine Heizbacke desselben, mehrere Heizzonen mit getrennt voneinander einstellbarer Heizleistung aufweist.

Weitere Merkmale der vorliegenden Erfindung ergeben sich aus den beigefügten Patentansprüchen, aus der nachfolgenden Beschreibung bevorzugter Ausführungsbeispiele sowie aus den beigefügten Zeichnungen.

Darin zeigt:
- Fig. 1: eine Innenpackung mit einer Außenumhüllung aus Folie oder (beschichtetem) Papier mit Kuvertfaltung, deren Faltlappen mit dem erfindungsgemäßen Verfahren verbunden wurden, in Schrägansicht,
- Fig. 2: eine skizzenhafte Schrägansicht einzelner Verfahrensschritte a) - d), insbesondere einzelner Falt- und Verbindungsschritte zur Herstellung der Kuvertfaltung einer Packung entsprechend Figur 1,
- Fig. 3: die Schritte b) aus Fig. 2 für eine Außenumhüllung aus Folie in vergrößerter Darstellung,
- Fig. 4: die Schritte c) aus Fig. 2 für die Außenumhüllung aus Folie in vergrößerter Darstellung,
- Fig. 5: die Schritte d) aus Fig. 2 für die Außenumhüllung aus Folie in vergrößerter Darstellung,
- Fig. 6, 7, 8: Einzelheiten der Schritte b) in der Schnittansicht VI-VI aus Figur 3,
- Fig. 9, 10: Einzelheiten der Schritte c) in einer Darstellung in der Schnittansicht IX-IX aus Fig. 4,
- Fig. 11: Einzelheiten der Schritte d) in einer Darstellung in der Schnittansicht XI-XI aus Fig. 4,
- Fig. 12: die Schritte b) aus Fig. 2 in vergrößerter Darstellung, allerdings für eine Außenumhüllung aus Papier,
- Fig. 13: die Schritte c) aus Fig. 2 für die Außenumhüllung aus Papier in vergrößerter Darstellung,
- Fig. 14: die Schritte d) aus Fig. 2 für die Außenumhüllung aus Papier in vergrößerter Darstellung,
- Fig. 15: Einzelheiten der Schritte c) in der Schnittansicht XV-XV aus Figur 13,
- Fig. 16: Einzelheiten weiterer Schritte c) analog zu der Darstellung von Fig. 15,
- Fig. 17: weitere Einzelheiten der Schritte b) in einer Ansicht aus der Blickrichtung XVII-XVII in Figur 12,
- Fig. 18: weitere Einzelheiten der Schritte c) in einer Ansicht aus der Blickrichtung XVIII-XVIII aus Figur 13,
- Fig. 19: eine Alternative für die Schritte b) im Zusammenhang mit der Verwendung besonders schmaler Verpackungen, in einer Darstellung entsprechend Figur 6.

Ein bevorzugtes Anwendungsgebiet für das erfindungsgemäße Verbindungsverfahren ist die Herstellung von in den Zeichnungen dargestellten Packungen 10, sogenannten Dichtpackungen für Zigaretten oder andere rauchbare Produkte, bei denen eine Innenpackung 11, in der Regel aus formstabilem Material, beispielsweise Karton, mit einer dichten Außenpackung bzw. Außenumhüllung 12 umgeben ist, die unter anderem dafür sorgt, dass das Aroma der in den Packungen 10 enthaltenen rauchbaren Produkte nicht verfliegt. Das erfindungsgemäße Verbindungsverfahren ist darauf aber nicht beschränkt. Unter anderem könnte es beispielsweise auch für die Fertigung von Gebindepackungen eingesetzt werden, bei denen eine gemeinsame Außenumhüllung eine Gruppe von Packungen mit jeweils rauchbaren Produkten umhüllt.

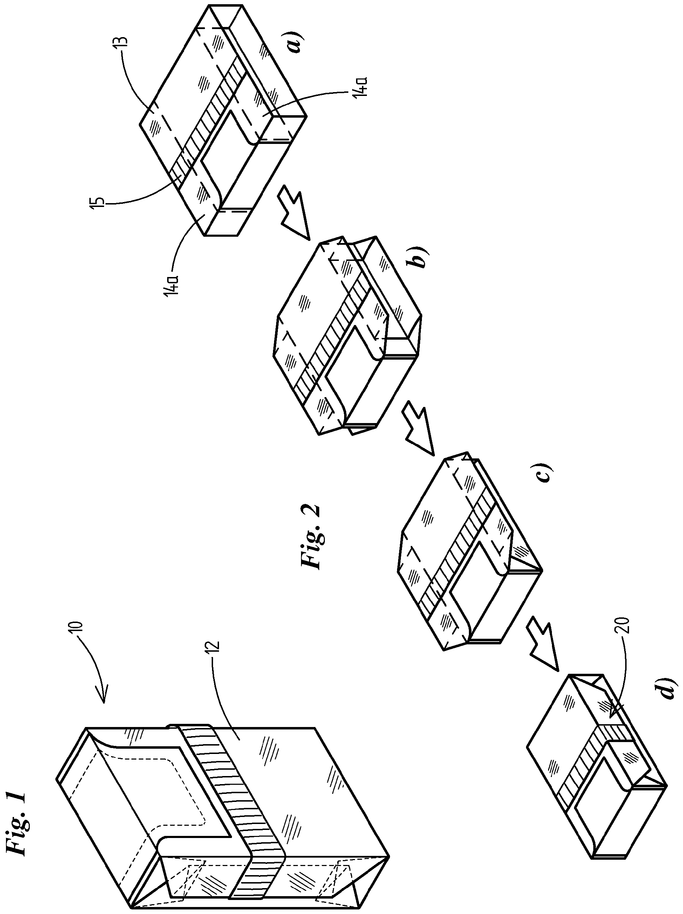

Die vorliegende quaderförmige Außenumhüllung 12 ist aus einem flachen Zuschnitt 13 gefertigt, der (nicht gezeigt) um die jeweilige, bereits fertig gestellte Innenpackung 11 u-förmig herum gefaltet wird und in einer schlauchförmigen Faltstellung, vergleiche Fig. 2 a), sich überlappende Schlauchlappen 14 a, 14 b aufweist, die unter Bildung einer Quernaht 15 in an sich bekannterweise durch eine nicht gezeigte Verbindungseinrichtung miteinander verbunden werden.

Aufgrund der Abmessung des flachen Zuschnitts 13 entstehen zudem in den Bereichen gegenüberliegender Längsseiten der Packung 10 Überstände des Zuschnitts 13 der Außenumhüllung 12 mit jeweils Faltlappen 16 a-b, 18 a-d, 19 a-b, die in einer in Fig. 2 gezeigten Faltreihenfolge durch eine nicht dargestellte, ein oder mehrere Faltorgane aufweisende Falteinrichtung gegen entsprechende Längsseiten 17 der Innenpackung 11 gefaltet werden.

Jede der dabei erzeugten Faltungen ist vorliegend als sogenannte Kuvertfaltung 20 ausgebildet und umfasst dabei zwei Innenlappen bildende, einander gegenüberliegende Querseitenfaltlappen 16 a und 16 b, die jeweils gegen die jeweilige Längsseite 17 der Innenpackung 11 gefaltet sind, jeweils angrenzende, dreieckförmige Faltlappen 18 a, b, c und d, die jeweils wiederum von außen gegen die Querseitenfaltlappen 16 a bzw. 16 b gefaltet sind, sowie Außenlappen bildende Längsseitenfaltlappen 19 a und 19 b, an denen jeweils unter Bildung einer bereichsweisen Doppellage 24 einer der angrenzenden, dreieckförmigen Faltlappen 18 a-d innenseitig anliegt, und die unter teilweise Überdeckung der Querseitenfaltlappen 16 a-b im Bereich der Doppellage 24 in ihrer Endstellung gemeinsam mit den anderen Faltlappen 16 a-b und 18 a-d der Kuvertfaltung 20 die jeweilige Längsseitenwandung der Außenumhüllung 12 bilden.

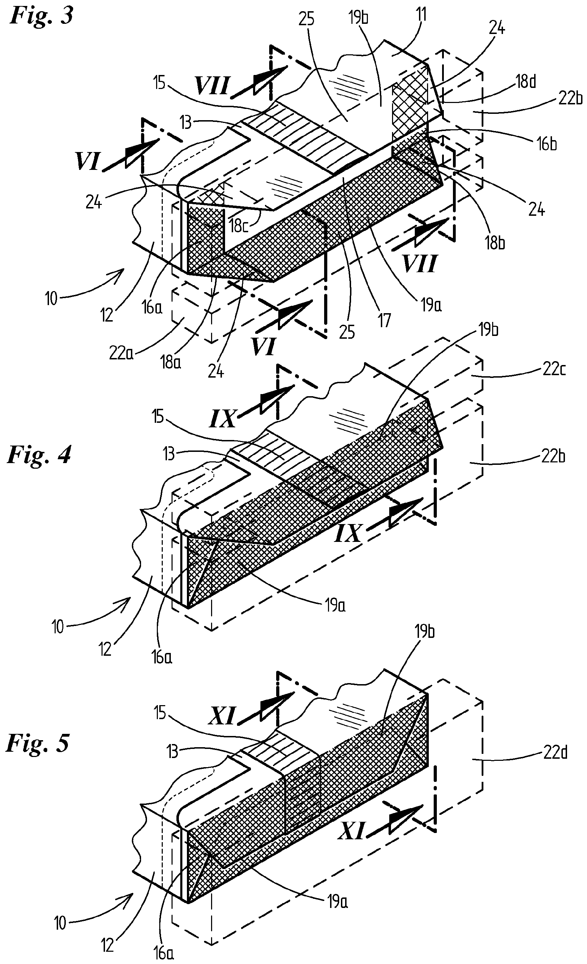

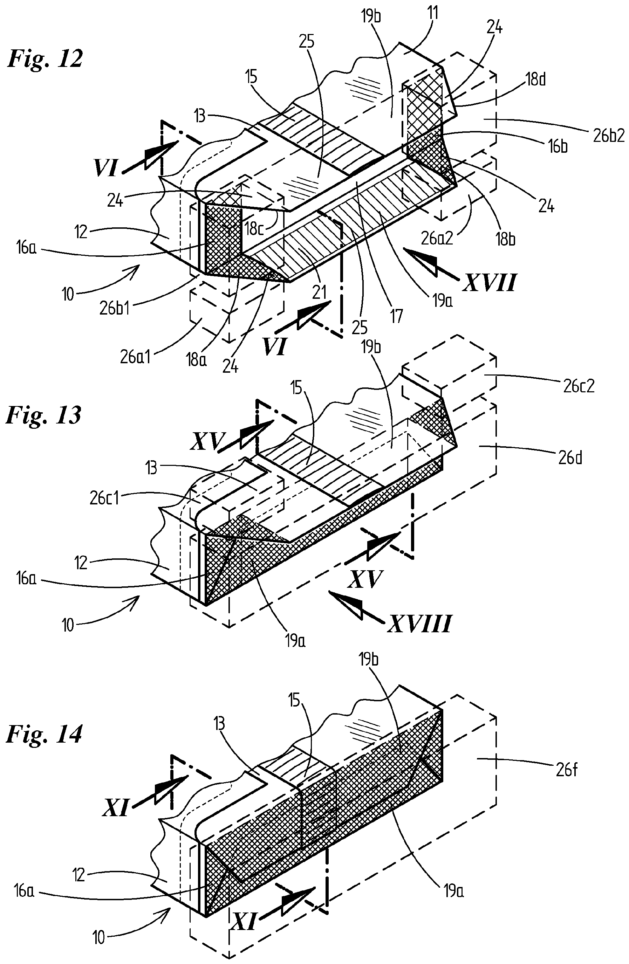

Die Außenumhüllung 12 und somit auch der Zuschnitt 13, aus dem die Außenumhüllung 12 gefertigt wird, besteht in der Regel aus dünnem Material. In dem Ausführungsbeispiel der Fig. 3-11 werden Zuschnitte aus (Kunststoff-)Folie verwendet, in dem Ausführungsbeispiel der Figuren 12-18 Zuschnitte aus dünnem Papier.

Die einzelnen Faltlappen 16 a-b, 18 a-d, 19 a-b werden dabei jeweils in beiden Fällen durch das Einbringen von als Verbindungswärme bezeichnete Wärme miteinander verbunden. Bei der Verwendung von siegelbarer Folie kann dies beispielsweise durch thermisches Siegeln erfolgen. Bei der Verwendung von Papier ist jeweils eine Papierseite, zumindest aber jeweils eine Seite der miteinander zu verklebenden Faltlappen 16 a-b, 18 a-d, 19 a-b mit einer Schicht 21 aus Heißklebstoff versehen, die entsprechend durch Verbindungswärme in klebefähigen Zustand versetzt wird. Es versteht sich aber, dass zur Verbindung theoretisch auch Schweißverfahren, wie etwa Ultraschallschweißen, verwendet werden könnten.

Zur Verbesserung des Verbindungsprozesses bzw. gegebenenfalls auch der jeweiligen Verbindung an sich ist erfindungsgemäß vorgesehen, die einzelnen Faltlappen 16 a-b, 18 a-d, 19 a-b mittels des gezielten Einbringens von Vorwärme vorzuwärmen, bevor sie miteinander verbunden werden.

Hierdurch wird unter anderem erreicht, dass die Einwirkzeit, in der Verbindungswärme aufgebracht werden muss, insgesamt verringert werden kann im Vergleich zu dem üblichen Verfahren im Stand der Technik, in dem dies nicht der Fall ist. Denn gerade, wenn eine Vielzahl von Faltlappen erwärmt werden muss, dauert es ansonsten geraume Zeit, bis die Verbindungswärme - wenn die Faltlappen nicht vorgewärmt sind - bis zu dem untersten Faltlappen durchgedrungen ist.

Für das Einbringen der Vorwärme oder der Verbindungswärme in die Faltlappen 16 a-b, 18 a-d, 19 a-b können ein oder mehrere Heizorgane 22 a-d vorgesehen sein, die entweder die jeweilige Wärme in den einzelnen Faltlappen 16 a-b, 18 a-d, 19 a-b erzeugen (beispielsweise mittels Ultraschall oder Infrarot-Strahlung oder dergleichen) und/oder die jeweilige Wärme auf sie übertragen; beispielsweise indem sie über Eigenwärme verfügen, die sie an die einzelnen Faltlappen 16 a-b, 18 a-d, 19 a-b unter Berührung derselben als Kontaktwärme übertragen.

Vorliegend sind als Heizorgane 22 a-d Eigenwärme aufweisende, relativ zu der jeweiligen Packung 10 bzw. dem jeweiligen Faltlappen 16 a-b, 18 a-d, 19 a-b (motorisch) bewegbare Heizkörper gezeigt, die innen über entsprechende, die Eigenwärme erzeugende, elektrisch betriebene Heizpatronen 23 verfügen, die dann das jeweilige (in der Regel metallische) Heizkörpermaterial der Heizkörper erwärmen.

Gemäß dem Ausführungsbeispiel der Fig. 3-11 werden während unterschiedlicher Faltzustände einzelne Heizorgane 22 a-d an die jeweiligen Faltlappen 16 a-b, 18 a-d, 19 a-b herangefahren und mit diesen in Kontakt gebracht. Darüber hinaus kann auch vorgesehen sein, im Rahmen des Erwärmens sogleich eine Verbindung zwischen beteiligten Faltlappen 16 a-b, 18 a-d, 19 a-b herzustellen.

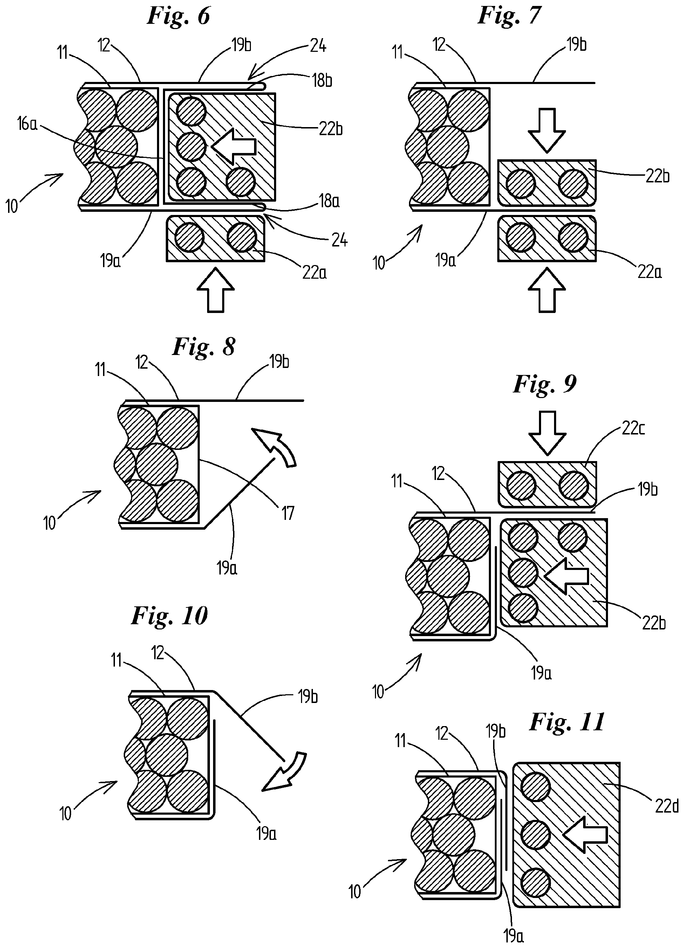

Wie dabei konkret unter anderem in den Fig. 3 und Fig. 7 zu erkennen ist, vergleiche aber auch Fig. 2 a) und b), wird beispielsweise der untere Längsseitenfaltlappen 19 a, bevor er in seine in Fig. 2) d) sowie in Fig. 10, 11 gezeigte Endstellung gefaltet wird (die gleichzeitig eine Verbindungsstellung darstellt, in der der Längsseitenfaltlappens 19 a mit dem Querseitenfaltlappen 16a bzw. 16b verbunden wird), nämlich in der dargestellten, von der Endstellung abweichenden Vorwärmstellung, mit einem unteren Heizorgan 22 a vorgewärmt, das sich zur Übertragung von Kontaktwärme an ihn von unten anlegt. Der notwendige Gegendruck wird dabei durch ein mittleres Heizorgan 22 b erzeugt, das den unteren Längsseitenfaltlappen 19 a bei Anlage an das mittlere Heizorgan 22 b von oben vorwärmt sowie den oben Längsseitenfaltlappen 19 b von unten. Ein oberes Heizorgan 22 c wiederum wärmt den oberen Längsseitenfaltlappen 19 b von oben vor.

Gleichzeitig werden auch die Doppellagen 24 aus dem jeweiligen angrenzenden, dreieckförmigen Faltlappen 18 a - d einerseits und dem an diesem jeweils anliegenden Längsseitenfaltlappen 19 a bzw. 19 b andererseits - bevor sie sich in ihren Endstellungen befinden - durch die Heizorgane 22 a und 22 b durch thermisches Siegeln miteinander verbunden, wodurch eine sich zuvor zwischen ihnen befindende, wärmeisolierende Luftschicht entfernt bzw. verdrängt wird. Hierbei werden diese Doppellagen 24 im vorliegenden Beispiel zudem vorgewärmt.

Das mittlere Heizorgan 22 b wärmt zudem die Querseitenfaltlappen 16 a und 16 b vor, vgl. ebenfalls Fig. 6, allerdings vorliegend während sich diese bereits in ihren Endstellungen befinden. Das mittlere Heizorgan 22 b fixiert die Querseitenfaltlappen 16 a und 16 b dabei in der vorliegenden Ausführungsform (auch dies muss aber nicht so sein) gleichzeitig an der Längsseite 17 der Innenpackung 11, indem sie diese mit Druck und unter Einbringen von Verbindungswärme an die Längsseite 17 derselben drückt.

Anschließend werden der obere und der untere, vorgewärmte Längsseitenfaltlappen 19 a bzw. 19 b nacheinander in ihre jeweilige Endstellung gefaltet, vgl. Fig. 10. Diese Endstellungen entsprechen anders ausgedrückt gleichzeitig Verbindungsstellungen, in denen die vorgewärmten Längsseitenfaltlappen 19 a bzw. 19 b sowie die anderen vorgewärmten Faltlappen der Faltlappen 16 a-b, 18 a-d, 19 a-b abschließend bzw. final durch thermisches Siegeln mithilfe eines weiteren Heizorgans 22 d miteinander verbunden werden, vgl. Fig. 5 und Fig. 11.

Das Ausführungsbeispiel der Fig. 12-18 unterscheidet sich von dem Ausführungsbeispiel der Fig. 3-11 insbesondere dadurch, dass nicht Zuschnitte 13 aus siegelbarer Folie verwendet werden, sondern Zuschnitte aus jeweils auf einer Innenseite eine Heißklebstoffschicht 21 aufweisendem, dünnen Papier.

Zweckmäßigerweise ist daher vorgesehen, dass die Heizorgane 26 a1-d jeweils für das Vorwärmen der Faltlappen 16 a-b, 18 a-d, 19 a-b nur mit der jeweiligen Innenseite des vorzuwärmenden Faltlappens 16 a-b, 18 a-d, 19 a-b in Kontakt kommen, da sie ansonsten bei Berührung der Heißklebstoffschicht 21 verschmutzen würden. Aus dieser Anforderung ergeben sich verschiedene Anforderungen bzw. Anpassungen der Faltreihenfolge sowie der Heizorgane 26 a1-d selbst.

Anstelle von sich im Wesentlichen über die bzw. entlang der vollen Länge des jeweiligen Längsseitenfaltenlappens erstreckender Heizorgane 22 a, b, c, die unter anderem die Doppellagen 24 vorwärmen, dabei aber auch den jeweiligen, zwischen diesen angeordneten Zwischenabschnitt 25 des jeweiligen Längsseitenfaltlappens 19 a bzw. 19 b kontaktieren, werden in dem Ausführungsbeispiel der Fig. 12-18 für die Doppellagen 24 einzelne, in ihren Abmessungen an die Doppellagen 24 angepasste untere Heizorgane 26 a1, 26 a2 sowie obere Heizorgane 26 c1 und 26 c2 verwendet, sodass der jeweilige Zwischenabschnitt 25 und mit ihm der entsprechende Heißklebstoffabschnitt des Zwischenabschnitts 25 während des Vorwärmens und Siegelns der Faltlappen der Doppellagen 24 frei bleibt bzw. nicht gleichzeitig von einem/dem Heizorgan kontaktiert und/oder überdeckt wird.

Ähnliches gilt für das Vorwärmen und Siegeln der Querseitenfaltlappen 16 a und 16 b, die durch auf deren Abmessungen angepasste, mittlere Heizorgane 26 b1 bzw. 26 b2 mit Vorwärme bzw. Verbindungswärme beaufschlagt werden.

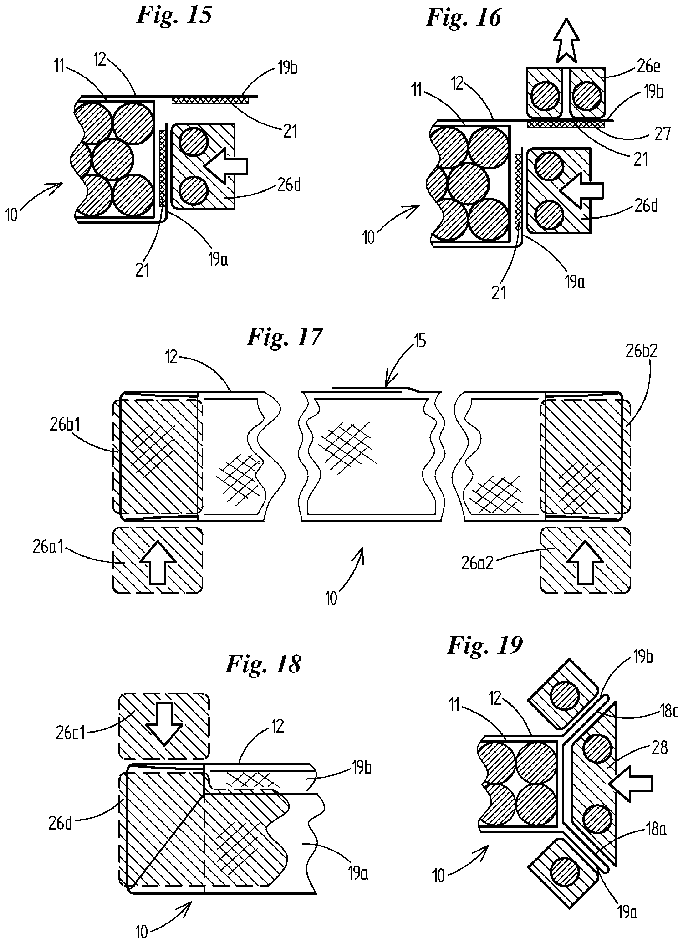

Weiter wird der untere Längsseitenfaltlappen 19 a (oder alternativ der obere Längsseitenfaltlappen 19 b) nicht in einer von seiner Endstellung abweichenden Vorwärmstellung vorgewärmt, sondern erst in seiner gefalteten Endstellung durch ein Heizorgan 26 d, vgl. Fig. 15.

Das Vorwärmen des oberen Längsseitenfaltlappens 19 b erfolgt in besonderer Weise mit einem Heizorgan 26 e, das über eine Anlagefläche 27 verfügt, an der der obere Längsseitenfaltlappen 19 b zur Wärmeübertragung anlegt wird, wobei die Anlagefläche 27 über eine oder mehrere, mit Unterdruck beaufschlagbare Saugbohrungen (nicht gezeigt) verfügt, sodass der obere Längsseitenfaltlappen 19 b während der Wärmeübertragung durch Unterdruck an der Anlagefläche 27 gehalten werden kann. Entsprechend ist es nicht erforderlich, auf der der Anlagefläche 27 gegenüberliegenden Seite des Längsseitenfaltlappens 19 ein einen entsprechenden Gegendruck erzeugendes Heizorgan zu platzieren, was aufgrund der innenseitigen Heißklebstoffschicht 21 auch nur unter Inkaufnahme der Verschmutzung der Anlagefläche des den Gegendruck erzeugenden Heizorgans möglich wäre.

Weiter zweckmäßigerweise werden im Übrigen die Parameter der Wärmeeintragung während des Vorwärmens der jeweiligen Faltlappen so gewählt, dass die Temperatur der Heißklebstoffschicht 21 unterhalb der Schmelztemperatur des Heißklebstoffs bleibt. Erst während des jeweiligen späteren Verbindungsvorgangs, also beispielsweise wenn der obere Längsseitenfaltlappen 19 b mit der Längsseite 17 der Innenpackung 11 verbunden wird, wird die Temperatur über die Schmelztemperatur hinaus erhöht, um die Klebewirkung des Heißklebstoffs herzustellen.

Final werden dann wiederum die jeweils übereinander liegenden Faltlappen, nämlich die vorgewärmten Längsseitenfaltlappen 19 a bzw. 19 b sowie die anderen vorgewärmten Faltlappen der Faltlappen 16 a-b, 18 a-d, 19 a-b mithilfe eines weiteren Heizorgans 26 f durch thermisches Siegeln miteinander verbunden.

In Fig. 19 ist schließlich eine Alternative für den Fall gezeigt, dass besonders schmale Packungen 10 hergestellt werden sollen mit entsprechend schmaler Außenumhüllung 12. In einem solchen Fall kann vorgesehen sein, unter Überführung in eine Vorwärmstellung den Abstand von einzelnen Faltlappen, den sie aufweisen, zu vergrößern, bevor sie in ihre Endstellung gefaltet werden.

So können beispielsweise die die übereinander angeordneten Doppellagen 24 bildenden Faltlappen durch Herunter- bzw. Hochbiegen in die gezeigte Vorwärmstellung bewegt werden, wodurch sich ein gegenüber der normalen Packungshöhe von innen nach außen vergrößernder Abstand zwischen ihnen ergibt, in den dann ein geeignetes Heizorgan 28 eintauchen kann.

### Bezugszeichenliste:

- 10: Packung
- 11: Innenpackung
- 12: Außenumhüllung
- 13: Zuschnitt
- 14 a-b: Schlauchlappen
- 15: Quernaht
- 16 a-b: Querseitenfaltlappen
- 17: Längsseiten Innenpackung
- 18 a-d: dreieckförmige Faltlappen
- 19 a-b: Längsseitenfaltlappen
- 20: Kuvertfaltung
- 21: Heißklebstoffschicht
- 22 a-d: Heiz- und/oder Siegelorgane
- 23: Heizpatronen
- 24: Doppellagen
- 25: Zwischenabschnitte Längsseitenfaltlappen
- 26 a1-a2: Heiz- und/oder Siegelorgane
- 26 b1-b2: Heiz- und/oder Siegelorgane
- 26 c1-c2: Heiz- und/oder Siegelorgane
- 26 f-d: Heiz- und/oder Siegelorgane
- 27: Anlagefläche
- 28: Siegelorgan

## Patentansprüche

1. Verfahren zum Verbinden eines ersten Faltlappens (16 a-b, 18 a-d, 19 a-b) eines vorzugsweise aus insbesondere siegelbarer Folie oder insbesondere siegelbarem Papier bestehenden Zuschnitts (13) im Rahmen der Fertigung von Packungen (10), insbesondere für Tabakprodukte, mit einem oder mehreren weiteren Faltlappen (16 a-b, 18 a-d, 19a-b) desselben Zuschnitts (13) oder mit einem anderen Zuschnitt unter Einbringen von Verbindungswärme während des Verbindungsvorgangs, **dadurch gekennzeichnet, dass** der erste Faltlappen (16 a-b, 18 a-d, 19 a-b) und/oder der andere Zuschnitt vorgewärmt wird, bevor der erste Faltlappen (16 a-b, 18 a-d, 19 a-b) und ein zweiter Faltlappen (16 a-b, 18 a-d, 19 a-b) bzw. der erste Faltlappen (16 a-b, 18 a-d, 19 ab) und der andere Zuschnitt während des Verbindungsvorgangs unter Einbringen der Verbindungswärme miteinander verbunden werden, und/oder dass der erste Faltlappen (16 a-b, 18 a-d, 19 a-b), bevor er mit einem oder dem zweiten Faltlappen (16 a-b, 18 a-d, 19 a-b) oder mit dem anderen Zuschnitt während des Verbindungsvorgangs unter Einbringen der Verbindungswärme verbunden wird, mit einem dritten Faltlappen (16 a-b, 18 a-d, 19 a-b) verbunden wird, insbesondere ebenfalls unter Einbringen von Verbindungswärme während des Verbindungsvorgangs.

2. Verfahren gemäß Anspruch 1, **dadurch gekennzeichnet, dass** der erste Faltlappen (16 a-b, 18 a-d, 19 a-b) und/oder der andere Zuschnitt vorgewärmt wird, bevor der erste Faltlappen (16 a-b, 18 a-d, 19 a-b) und/oder der zweite Faltlappen (16 a-b, 18 a-d, 19 a-b) in eine Endstellung gefaltet wird, insbesondere in eine Endstellung, in der der erste Faltlappen (16 a-b, 18 a-d, 19 a-b) und der zweite Faltlappen (16 a-b, 18 a-d, 19 ab) bzw. der erste Faltlappen (16 a-b, 18 a-d, 19 a-b) und der andere Zuschnitt durch das Einbringen der Verbindungswärme miteinander verbunden werden,
und/oder dass der erste Faltlappen (16 a-b, 18 a-d, 19 a-b) und/oder der andere Zuschnitt vorgewärmt wird, bevor der erste Faltlappen (16 a-b, 18 a-d, 19 a-b) und/oder der zweite Faltlappen (16 a-b, 18 a-d, 19 a-b) in eine Verbindungsstellung gefaltet wird, in der der erste Faltlappen (16 a-b, 18 a-d, 19 a-b) und der zweite Faltlappen (16 a-b, 18 a-d, 19 ab) bzw. der erste Faltlappen (16 a-b, 18 a-d, 19 a-b) und der andere Zuschnitt durch das Einbringen der Verbindungswärme miteinander verbunden werden.

3. Verfahren gemäß einem oder mehreren der vorhergehenden Ansprüche, **dadurch gekennzeichnet, dass** der erste Faltlappen (16 a-b, 18 a-d, 19 a-b) durch ein insbesondere Wärme abgebendes und/oder ein Wärme erzeugendes Heizorgan vorgewärmt wird, insbesondere ein Heizorgan, an das der erste Faltlappen (16 a-b, 18 a-d, 19 a-b) durch Relativbewegung angelegt wird, vorzugweise ein bewegbares Heizorgan, das zu diesem Zweck an den in Position gehaltenen ersten Faltlappen (16 a-b, 18 a-d, 19 a-b) heranbewegt wird,
und/oder dass der erste Faltlappen (16 a-b, 18 a-d, 19 a-b) in einer von seiner Endstellung abweichenden Vorwärmstellung vorgewärmt wird und danach durch Faltung aus der Vorwärmstellung in die insbesondere mit seiner Endstellung übereinstimmenden Verbindungsstellung überführt wird.

4. Verfahren gemäß einem oder mehreren der vorhergehenden Ansprüche, **dadurch gekennzeichnet, dass** der erste Faltlappen (16 a-b, 18 a-d, 19 a-b) gemeinsam mit einem oder dem an ihn angelegten dritten Faltlappen (16 a-b, 18 a-d, 19 a-b) vorgewärmt wird, vorzugsweise dabei mit dem dritten Faltlappen (16 a-b, 18 a-d, 19 a-b) durch Siegelung verbunden wird, und dass der erste Faltlappen (16 a-b, 18 a-d, 19 a-b) danach gemeinsam mit dem an ihm anliegenden, bevorzugt mit ihm verbundenen dritten Faltlappen (16 a-b, 18 a-d, 19 a-b) in eine oder die Verbindungsstellung überführt wird, in der er dann mit dem zweiten Faltlappen (16 a-b, 18 a-d, 19 a-b) oder dem anderen Zuschnitt verbunden wird,
und/oder dass der erste Faltlappen (16 a-b, 18 a-d, 19 a-b) Teil eines eine Innenpackung oder eine Gruppe von Innenpackungen schlauchförmig umgebenden, für diese eine Außenumhüllung bildenden Zuschnitts ist und im Rahmen der Fertigung dieser Außenumhüllung vorgewärmt und dabei entweder mit dem zweiten Faltlappen (16 a-b, 18 a-d, 19 a-b) und ggf. mit dem dritten Faltlappen (16 a-b, 18 a-d, 19 a-b) verbunden wird, insbesondere im Rahmen der Herstellung einer den ersten Faltlappen (16 a-b, 18 a-d, 19 a-b) umfassenden Kuvertfaltung, oder dabei mit der aus dem anderen Zuschnitt gebildeten Innenpackung verbunden wird.

5. Verfahren gemäß Anspruch 4, **dadurch gekennzeichnet, dass** der zweite Faltlappen (16 a-b, 18 a-d, 19 a-b) ein Querseitenfaltlappen (16 a-b) der Kuvertfaltung (20) ist, insbesondere ein in seiner Endstellung gegen eine Längsseite (17) der Innenpackung (11) gefalteter Querseitenfaltlappen (16 a-b), und dass der erste Faltlappen (16 a-b, 18 a-d, 19 a-b) ein an diesen angrenzender, insbesondere dreieckförmiger Faltlappen (18 a-d) ist.

6. Verfahren gemäß Anspruch 4 oder 5, **dadurch gekennzeichnet, dass** der dritte Faltlappen (16 a-b, 18 a-d, 19a-b) ein Längsseitenfaltlappen (19 a-b) ist, an den, bevor der angrenzende Faltlappen (16 a-b) aus seiner Vorwärmstellung in die Verbindungsstellung gefaltet wird, der angrenzende Faltlappen (16 a-b) durch Falten des Längsseitenfaltlappens (19 a-b) und/oder des angrenzenden Faltlappens (16 a-b) angelegt und insbesondere mit diesem vorzugsweise durch thermisches Siegeln oder Schweißen verbunden wird, wobei danach der angrenzende Faltlappen (16 a-b) gemeinsam mit dem Längsseitenfaltlappen (19 a-b) zumindest oder nur in einem Bereich, in dem sie überlappen, vorgewärmt wird, wobei der angrenzende Faltlappen (16 a-b) und der Längsseitenfaltlappen (19 a-b) danach gemeinsam auf den Querseitenfaltlappen (16 a-b) gefaltet werden.

7. Verfahren gemäß einem oder mehreren der vorhergehenden Ansprüche 4 - 6, **dadurch gekennzeichnet, dass**, wenn sich sämtliche Faltlappen (16 a-b, 18 a-d, 19a-b) der Kuvertfaltung (20) in ihrer jeweiligen Endstellung befinden, übereinander liegende Faltlappen (16 a-b, 18 a-d, 19a-b) der Kuvertfaltung (20) unter Einbringen von Verbindungswärme während des Verbindungsvorgangs, ggf. erneut, miteinander verbunden werden, insbesondere durch thermisches Siegeln oder Schweißen.

8. Verfahren gemäß einem oder mehreren der vorhergehenden Ansprüche, **dadurch gekennzeichnet, dass** der erste Faltlappen (16 a-b, 18 a-d, 19a-b) auf der Seite, die mit dem zweiten Faltlappen (16 a-b, 18 a-d, 19a-b) oder dem anderen Zuschnitt verbunden wird, mit einer Heißklebstoffschicht (21) versehen ist, dass die gegenüberliegende Seite des ersten Faltlappens (16 a-b, 18 a-d, 19a-b) keine Heißklebstoffschicht (21) aufweist, und dass beim Vorwärmen des ersten Faltlappens (16 a-b, 18 a-d, 19a-b) diese gegenüberliegende Seite durch Relativbewegung an das Heizorgan angelegt wird und/oder dass die Haupteinstrahlrichtung der insbesondere von dem Heizorgan stammenden Wärme zum Vorwärmen des ersten Faltlappens (16 a-b, 18 a-d, 19a-b) auf diese gegenüberliegende Seite gerichtet ist.

9. Verfahren gemäß einem oder mehreren der vorhergehenden Ansprüche, **dadurch gekennzeichnet, dass** der erste Faltlappen (16 a-b, 18 a-d, 19a-b) auf der Seite, die mit dem zweiten Faltlappen (16 a-b, 18 a-d, 19a-b) oder mit dem anderen Zuschnitt verbunden wird, mit einer Heißklebstoffschicht versehen ist, und dass die Parameter der Wärmeeintragung während des Vorwärmens des ersten Faltlappens (16 a-b, 18 a-d, 19ab) so gewählt sind, dass die Temperatur der Heißklebstoffschicht unterhalb der Schmelztemperatur des Heißklebstoffs bleibt,
und/oder dass der erste Faltlappen (16 a-b, 18 a-d, 19 a-b) und/oder der andere Zuschnitt vorgewärmt wird mit der Wärmestrahlung eines insbesondere von dem ersten Faltlappen (16 a-b, 18 a-d, 19 a-b) und/oder dem anderen Zuschnitt entfernt angeordneten, als Wärmestrahler ausgebildeten Heizorgans und/oder durch Wärme, die von einem an dem ersten Faltlappen (16 a-b, 18 a-d, 19 a-b) und/oder dem anderen Zuschnitt anliegenden Heizorgan stammt und von diesem mittels Kontaktwärmeübertragung an den ersten Faltlappen (16 a-b, 18 a-d, 19 a-b) bzw. den anderen Zuschnitt übertragen wird.

10. Verfahren gemäß einem oder mehreren der vorhergehenden Ansprüche, **dadurch gekennzeichnet, dass** zunächst der erste und der dritte Faltlappen (16 a-b, 18 a-d, 19 ab) in einem ersten Faltschritt aneinandergelegt werden und danach unter Einbringen der Verbindungswärme miteinander verbunden werden, und dass danach in einem zweiten Faltschritt der insbesondere in eine Endstellung gefaltete zweite Faltlappen (16 a-b, 18 a-d, 19 a-b) und die beiden bereits miteinander verbundenen Faltlappen (16 a-b, 18 a-d, 19 a-b) aneinandergelegt werden, insbesondere durch Falten der bereits miteinander verbundenen Faltlappen (16 a-b, 18 a-d, 19 a-b) auf den ersten Faltlappen (16 a-b, 18 a-d, 19 a-b), und danach durch Einbringen von Verbindungswärme miteinander verbunden werden.

11. Vorrichtung zum Verbinden eines ersten Faltlappens (16 a-b, 18 a-d, 19 a-b) eines vorzugsweise aus insbesondere siegelbarer Folie oder insbesondere siegelbarem Papier bestehenden Zuschnitts im Rahmen der Fertigung von Packungen, insbesondere für Tabakprodukte, mit einem oder mehreren weiteren Faltlappen (16 a-b, 18 a-d, 19 a-b) desselben Zuschnitts oder mit einem anderen Zuschnitt, mit einer Falteinrichtung, mit der der erste Faltlappen (16 a-b, 18 a-d, 19 a-b) und/oder ein oder mehrere der anderen Faltlappen (16 a-b, 18 a-d, 19 a-b) gefaltet werden können, und mit einer insbesondere ein Siegelorgan umfassenden Verbindungseinrichtung, mit der der erste Faltlappen (16 ab, 18 a-d, 19 a-b) und/oder ein oder mehrere der anderen Faltlappen (16 a-b, 18 a-d, 19 a-b) und/oder der andere Zuschnitt miteinander unter Einbringen von Verbindungswärme miteinander verbunden werden können, insbesondere zur Durchführung des Verfahrens gemäß einem oder mehreren der vorhergehenden Ansprüche 1 - 10.

12. Vorrichtung gemäß Anspruch 11, **dadurch gekennzeichnet, dass** die Vorrichtung ein Heizorgan aufweist zum Vorwärmen des ersten Faltlappens (16 a-b, 18 a-d, 19 a-b) und/oder des anderen Zuschnitts vor dem Verbinden derselben.

13. Vorrichtung gemäß Anspruch 12, **dadurch gekennzeichnet, dass** das Heizorgan über eine Anlagefläche verfügt, an die der erste Faltlappen (16 a-b, 18 a-d, 19 a-b) zur Wärmeübertragung anlegbar ist, und dass die Anlagefläche über eine oder mehrere, mit Unterdruck beaufschlagbare Saugbohrungen verfügt, sodass der erste Faltlappen (16 a-b, 18 a-d, 19 a-b) während der Wärmeübertragung durch Unterdruck an der Anlagefläche gehalten werden kann.

14. Vorrichtung gemäß Anspruch 12 oder 13, **dadurch gekennzeichnet, dass** das Heizorgan, insbesondere ein Heizkörper oder eine Heizbacke desselben, mehrere Heizzonen mit getrennt voneinander einstellbarer Heizleistung aufweist.

15. Vorrichtung gemäß einem oder mehreren der vorhergehenden Ansprüche 11-14, **dadurch gekennzeichnet, dass** die Vorrichtung eine Steuereinheit zum Steuern der Falteinrichtung und/oder der Verbindungseinrichtung und/oder des Heizorgans aufweist, die derart ausgebildet und eingerichtet ist, dass sie das Verfahren gemäß einem oder mehreren der vorhergehenden Ansprüche 1 - 10 ausführen kann.
